(19) Europäisches Patentamt
European Patent Office
Office européen des brevets

(11) **EP 4 675 825 A1**

(12) **EUROPEAN PATENT APPLICATION**

(43) Date of publication:
**07.01.2026 Bulletin 2026/02**

(21) Application number: **25180496.9**

(22) Date of filing: **03.06.2025**

(51) International Patent Classification (IPC):
**H01M 50/489** (2021.01)     **H01M 50/417** (2021.01)
**H01M 10/052** (2010.01)     **C08J 5/18** (2006.01)
**H01M 50/403** (2021.01)     **H01M 50/491** (2021.01)
**C08L 23/04** (2006.01)      **B29C 55/00** (2006.01)
**B01D 71/26** (2006.01)

(52) Cooperative Patent Classification (CPC):
(C-Sets available)
**H01M 50/403; B01D 67/002; B01D 67/003;
B01D 69/02; B01D 71/261; B29C 55/143;
C08J 5/18; C08L 23/04; H01M 10/052;
H01M 50/417; H01M 50/489; H01M 50/491;**
B01D 2323/12; B01D 2325/22          (Cont.)

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH LA MA MD TN**

(30) Priority: **01.07.2024 KR 20240086000**

(71) Applicants:
• **SK Innovation Co., Ltd.
Seoul 03188 (KR)**

• **SK ie technology Co., Ltd.
Jongno-gu
Seoul
03188 (KR)**

(72) Inventor: **JUNG, In Hwa
34124 Daejeon (KR)**

(74) Representative: **Prüfer & Partner mbB
Patentanwälte · Rechtsanwälte
Sohnckestraße 12
81479 München (DE)**

(54) **POLYOLEFIN-BASED MICROPOROUS MEMBRANE, METHOD FOR MANUFACTURING THE SAME, AND SECONDARY BATTERY INCLUDING THE SAME**

(57)     Provided are a polyolefin-based microporous membrane or a separator for a secondary battery, a method for manufacturing the same, and a secondary battery including the same. The polyolefin-based microporous membrane or the separator for a secondary battery has a puncture strength of 0.3 N/$\mu$m or more, a gas permeability of $0.8\times10^{-5}$ Darcy or more, a porosity of 30.0% or more, and a surface roughness of 2.1 $\mu$m or less, the surface roughness being a value obtained by selecting 5 random points on a front surface and 5 random points on a back surface, each having an area of 284 $\mu$m (width) $\times$ 220 $\mu$m (length), measuring a maximum height difference ($\mu$m, $R_{max}$) which is a difference between the highest surface height and the lowest surface height in the area of each point, and adding an average value of values measured in each of the 5 points on the front surface and an average value of values measured in each of the 5 points on the back surface.

FIG. 1

(Cont. next page)

EP 4 675 825 A1

(52) Cooperative Patent Classification (CPC): (Cont.)

C-Sets
**C08L 23/04, C08L 23/04, C08L 23/10**

**Description**

**TECHNICAL FIELD**

The disclosure relates to a polyolefin-based microporous membrane, a method for manufacturing the same, and a secondary battery including the same.

**BACKGROUND**

There is a growing interest in electrochemical devices used in mobile phones, laptops, electric vehicles, among others, and their energy storage technology. In particular, research on a separator, which is one of the main constituents determining the characteristics of a secondary battery, considered as the electrochemical device, is actively being performed. Since the separator is impregnated with an electrolyte solution and serves as an ion-conductive channel, it has a strong influence on the physical and electrochemical properties of the secondary battery.

Typically, a polyolefin-based microporous membrane having a hole-closing function is used as a separator for a secondary battery, which provides high ion permeability and excellent electrical insulation, and which further enables cutting off current flow when an abnormal temperature rise occurs inside a battery and/or prevents excessive temperature rise.

However, when the polyolefin-based microporous membrane is heated to a high temperature close to its melting point or even higher, it undergoes shrinking, which may ultimately lead to undesired breakage. Hence, research to improve heat resistance is required.

**SUMMARY**

An object of the present disclosure is directed to providing a polyolefin-based microporous membrane or a separator for a secondary battery, and a secondary battery including the same.

Another object of the present disclosure is directed to providing a method for manufacturing a polyolefin-based microporous membrane.

In one general aspect, a polyolefin-based microporous membrane which has a puncture strength of 0.3 N/$\mu$m or more, a gas permeability of $0.8 \times 10^{-5}$ Darcy or more, a porosity of 30.0% or more, and a surface roughness of 2.1 $\mu$m or less is provided, the surface roughness being a value obtained by selecting 5 random points on a front surface (or at least 5 random points on a front surface) and 5 random points on a back surface (or at least 5 random points on a back surface) of the polyolefin-based microporous membrane, each having an area of 284 $\mu$m (width) $\times$ 220 $\mu$m (length), measuring a maximum height difference ($\mu$m, $R_{max}$), which is a difference between the highest surface height and the lowest surface height in the area of each point, and adding an average value of values measured in each of the 5 points (or the at least 5 points) on the front surface and an average value of values measured in each of the 5 points (or the at least 5 points) on the back surface. The values of the puncture strength, of the gas permeability, and of the porosity may respectively be measured by corresponding methods described below in the present disclosure.

In an exemplary embodiment, the polyolefin-based microporous membrane may include a polyethylene mixture including a first polyethylene having a weight average molecular weight of $30 \times 10^4$ g/mol to $100 \times 10^4$ g/mol and a melting temperature of 133°C or higher; and a second polyethylene having a weight average molecular weight of less than $30 \times 10^4$ g/mol and a melting temperature of 126°C or lower. The melting temperature was determined from a peak position in a curve measured by scanning 5 mg of a sample in a temperature range from 25°C to 200°C at a heating rate of 10°C/min under a nitrogen atmosphere with a differential scanning calorimeter (DSC).

Otherwise, in an exemplary embodiment, the polyolefin-based microporous membrane may further include a polypropylene having a viscosity average molecular weight of $100 \times 10^4$ g/mol to $300 \times 10^4$ g/mol and a melting temperature of 160°C or higher. The melting temperature may be defined as the temperature at which a polymer transits from a crystalline state into a viscous flow state. The melting temperature may be measured by differential scanning calorimeter (DSC), such as by a corresponding method described below in the present disclosure.

In an exemplary embodiment, a weight ratio between the first polyethylene and the second polyethylene may be 60:40 to 85:15.

In an exemplary embodiment, the weight ratio between the polyethylene mixture and the polypropylene may be 85:15 to 95:5.

In an exemplary embodiment, the polyolefin-based microporous membrane may have an average pore size of 20 nm to 50 nm.

In an exemplary embodiment, the polyolefin-based microporous membrane may have a thickness of 3 $\mu$m to 20 $\mu$m.

In another general aspect, a separator for a secondary battery which has a puncture strength of 0.3 N/$\mu$m or

more, a gas permeability of $0.8 \times 10^{-5}$ Darcy or more, a porosity of 30.0% or more, and a surface roughness of 2.1 $\mu$m or less is provided, the surface roughness being a value obtained by selecting 5 random points on a front surface (or at least 5 random points on a front surface) and 5 random points on a back surface (or at least 5 random points on a back surface) of the separator for a secondary battery, each having an area of 284 $\mu$m (width) $\times$ 220 $\mu$m (length), measuring a maximum height difference ($\mu$m, $R_{max}$) which is a difference between the highest surface height and the lowest surface height in the area of each point, and adding an average value of values measured in each of the 5 points (or the at least 5 points) on the front surface and an average value of values measured in each of the 5 points (or the at least 5 points) on the back surface.

In an exemplary embodiment, the separator for a secondary battery may have a shut-down temperature of 137°C or lower. The value of the shut-down temperature may be measured by the corresponding method described below in the present disclosure.

In an exemplary embodiment, the separator for a secondary battery may have a melt-down temperature of 155°C or higher. The value of the melt-down temperature may be measured by the corresponding method described below in the present disclosure.

In an exemplary embodiment, the separator for a secondary battery may include a polyethylene mixture including a first polyethylene having a weight average molecular weight of $30 \times 10^4$ g/mol to $100 \times 10^4$ g/mol and a melting temperature of 133°C or higher; and a second polyethylene having a weight average molecular weight of less than $30 \times 10^4$ g/mol and a melting temperature of 126°C or lower. Otherwise, in an exemplary embodiment, the separator for a secondary battery may further include a polypropylene having a viscosity average molecular weight of $100 \times 10^4$ g/mol to $300 \times 10^4$ g/mol and a melting temperature of 160°C or higher. The values of the weight average molecular weight, of the viscosity average molecular weight, and of the melting temperature may respectively be measured by corresponding methods described below in the present disclosure.

In an exemplary embodiment, a weight ratio between the first polyethylene and the second polyethylene may be 60:40 to 85:15.

In an exemplary embodiment, the weight ratio between the polyethylene mixture and the polypropylene may be 85:15 to 95:5.

In another general aspect, a method for manufacturing a polyolefin-based microporous membrane includes: kneading a polyolefin-based resin and a diluent to prepare a molten material; molding the molten material into a sheet form; and stretching the molded sheet and extracting the diluent,

wherein the polyolefin-based microporous membrane has a puncture strength of 0.3 N/$\mu$m or more, a gas permeability of $0.8 \times 10^{-5}$ Darcy or more, a porosity of 30.0% or more, and a surface roughness of 2.1 $\mu$m or less is provided, the surface roughness being a value obtained by selecting 5 random points on a front surface (or at least 5 random points on a front surface) and 5 random points on a back surface (or at least 5 random points on a back surface) of the polyolefin-based microporous membrane, each having an area of 284 $\mu$m (width) $\times$ 220 $\mu$m (length), measuring a maximum height difference ($\mu$m, $R_{max}$) which is a difference between the highest surface height and the lowest surface height in the area of each point, and adding an average value of values measured in each of the 5 points (or the at least 5 points) on the front surface and an average value of values measured in each of the 5 points (or the at least 5 points) on the back surface.

In an exemplary embodiment, after extracting the diluent, a step of drying the sheet to a shrinkage in a machine direction (MD) of 5% or less and a shrinkage in a transverse direction (TD) of 10% or less may be further included.

In an exemplary embodiment, the polyolefin-based microporous membrane may be a separator for a secondary battery.

In one general aspect, use of the polyolefin-based microporous membrane as a separator for a secondary battery is provided.

In still another general aspect, a secondary battery includes the separator for a secondary battery according to the exemplary embodiment.

Other features and aspects will be apparent from the following detailed description, the drawings, and the claims.

## BRIEF DESCRIPTION OF THE DRAWINGS

FIG. 1 is a schematic plan view of the secondary battery according to an exemplary embodiment.
FIG. 2 is a schematic cross-sectional view of the secondary battery according to an exemplary embodiment.

[Detailed Description of Main Elements]

100: Positive electrode

105: Positive electrode current collector
107: Positive electrode lead
110: Positive electrode active material layer
120: Negative electrode active material layer
125: Negative electrode current collector
127: Negative electrode lead
130: Negative electrode
140: Separator
150: Electrode assembly
160: Case

**DETAILED DESCRIPTION OF EMBODIMENTS**

Since the embodiments described in the present specification may be modified in many different forms, the technology according to an exemplary embodiment is not limited to the embodiments set forth herein. Furthermore, throughout the specification, unless otherwise particularly stated, the word "comprising", "including", "containing", "being provided with", or "having" does not mean the exclusion of any other constituent element, but rather means further inclusion of other constituent elements, and elements, materials, or processes which are not further listed are not excluded.

The numerical range used in the present specification includes all values within the range including the lower limit and the upper limit, increments logically derived in a form and spanning in a defined range, all double limited values, and all possible combinations of the upper limit and the lower limit in the numerical range defined in different forms. As an example, when it is defined that a content of a composition is 10% to 80% or 20% to 50%, it should be interpreted that a numerical range of 10% to 50% or 50% to 80% is also described in the specification of the present specification. Unless otherwise defined in the present specification, values which may be outside a numerical range due to experimental error or rounding off of a value are also included in the defined numerical range.

Hereinafter, unless otherwise particularly defined in the present specification, "about" may be considered as a value within 30%, 25%, 20%, 15%, 10%, 5%, 3%, 2%, 1%, or 0.5% of a stated value.

Hereinafter, the present disclosure will be described in detail. However, it is only illustrative, and the present disclosure is not limited to the specific embodiments which are illustratively described in the present disclosure.

An exemplary embodiment relates to a polyolefin-based microporous membrane, which implements the physical properties required for implementing strength of a separator, particularly to increase safety of a secondary battery, simultaneously. Specifically, the polyolefin-based microporous membrane according to an exemplary embodiment has a puncture strength of 0.3 N/$\mu$m or more, a gas permeability of $0.8 \times 10^{-5}$ Darcy or more, a porosity of 30.0% or more, and a surface roughness of 2.1 $\mu$m or less, the surface roughness being a value obtained by selecting 5 random points on a front surface and 5 random points on a back surface of the polyolefin-based microporous membrane, each having an area of 284 $\mu$m (width) $\times$ 220 $\mu$m (length), measuring a maximum height difference ($\mu$m, $R_{max}$) which is a difference between the highest surface height and the lowest surface height in the area of each point, and adding an average value of values measured in each of the 5 points on the front surface and an average value of values measured in each of the 5 points on the back surface.

The means is not particularly limited as long as the polyolefin-based microporous membrane according to an exemplary embodiment satisfies the defined puncture strength, gas permeability, porosity, and surface roughness simultaneously, and for example, may be satisfied by various variables of the composition or the manufacturing method of the polyolefin-based porous membrane.

As an example, the polyolefin-based microporous membrane may include polyethylene. The polyolefin-based microporous membrane may include polyethylene and polypropylene. Specifically, the polyolefin-based microporous membrane may comprise one or more (preferably two) polyethylene polymers, and in case of multiple polyethylene polymers these may be of varying average molecular weights. Further, the polyolefin-based microporous membrane may comprise one or more polyethylene polymers and one or more (preferably only one) polypropylene polymers, and in case of multiple polyethylene polymers and/or multiple polypropylene polymers these may be of varying average molecular weights, respectively.

For example, the polyolefin-based microporous membrane according to an exemplary embodiment may include a first polyethylene having a relatively high molecular weight of $30 \times 10^4$ g/mol or more and a second polyethylene having a relatively low molecular weight of less than $30 \times 10^4$ g/mol. Specifically, for example, the polyolefin-based microporous membrane may include a polyethylene mixture including a first polyethylene having a weight average molecular weight of $30 \times 10^4$ g/mol to $100 \times 10^4$ g/mol; and a second polyethylene having a weight average molecular weight of less than $30 \times 10^4$ g/mol.

Otherwise, in an exemplary embodiment, the polyolefin-based microporous membrane may include a polyethylene mixture including a first polyethylene having a weight average molecular weight of $30\times10^4$ g/mol to $100\times10^4$ g/mol and a melting temperature of 133°C or higher; and a second polyethylene having a weight average molecular weight of less than $30\times10^4$ g/mol and a melting temperature of 126°C or lower.

Otherwise, in an exemplary embodiment, the polyolefin-based microporous membrane may further include a polypropylene having a viscosity average molecular weight of $100\times10^4$ g/mol to $300\times10^4$ g/mol and a melting temperature of 160°C or higher, together with the polyethylene mixture. For example, the polyolefin-based microporous membrane may have a viscosity average molecular weight of $100\times10^4$ g/mol to $250\times10^4$ g/mol, $100\times10^4$ g/mol to $240\times10^4$ g/mol, or $100\times10^4$ g/mol to $230\times10^4$ g/mol. For example, the polyolefin-based microporous membrane may have a melting temperature of 160°C or higher, 161°C or higher and 170°C or lower, 169°C or lower, 168°C or lower, or any value between the numerical values. For example, the polyolefin-based microporous membrane may have a melting temperature falling in a range of 160 to 170°C or 161 to 168°C.

In an exemplary embodiment, the weight average molecular weight of the first polyethylene may be, for example, $35\times10^4$ g/mol to $100\times10^4$ g/mol, $30\times10^4$ g/mol to $90\times10^4$ g/mol, $30\times10^4$ g/mol to $85\times10^4$ g/mol, $40\times10^4$ g/mol to $80\times10^4$ g/mol, $35x10^4$ g/mol to $95\times10^4$ g/mol, or $40\times10^4$ g/mol to $100\times10^4$ g/mol. In an exemplary embodiment, the melting temperature of the first polyethylene may be, for example, 133°C to 150°C, 133°C to 145°C, 133°C to 140°C, 133°C to 138°C, 133°C to 136°C, 133°C to 135°C, about 133°C, about 134°C, or about 135°C.

In an exemplary embodiment, the weight average molecular weight of the second polyethylene may be, for example, less than $30\times10^4$ g/mol, $29\times10^4$ g/mol or less, $28\times10^4$ g/mol or less, $27\times10^4$ g/mol or less, $26\times10^4$ g/mol or less, $25\times10^4$ g/mol or less, $24\times10^4$ g/mol or less, $23\times10^4$ g/mol or less, $20\times10^4$ g/mol or less, or $18x10^4$ g/mol or less. Herein, the lower limit of the weight average molecular weight of the second polyethylene may be, for example, $2\times10^4$ g/mol or more, $5\times10^4$ g/mol or more, $8\times10^4$ g/mol or more, or $10\times10^4$ g/mol or more. In an exemplary embodiment, the melting temperature of the second polyethylene may be, for example, 100°C to 126°C, 105°C to 126°C, 110°C to 126°C, 115°C to 126°C, 118°C to 126°C, 120°C to 126°C, 122°C to 126°C, about 122°C, about 123°C, about 124°C, or about 125°C.

In an exemplary embodiment, a weight ratio between the first polyethylene and the second polyethylene may be 60:40 to 83:17, 63:37 to 85:15, 60:40 to 80:20, or 65:35 to 80:20. In an exemplary embodiment, when the content of the first polyethylene having a relatively high molecular weight is lower than the weight range, the mechanical/physical properties and safety at a high temperature of the microporous membrane may not be implemented simultaneously. For example, gas permeability and/or strength sufficient for using the microporous membrane as the separator of a battery may not be implemented. In an exemplary embodiment, when the content of the second polyethylene having a relatively low molecular weight is lower than the appropriate weight range, the mechanical/physical properties and safety at a high temperature of the microporous membrane may not be implemented simultaneously, and for example, the shut-down temperature may not be lowered to 137°C or lower. However, since it is only an example of a means which may implement the physical properties of the polyolefin-based microporous membrane according to an exemplary embodiment simultaneously, it is not necessarily limited thereto.

In an exemplary embodiment, when the polyolefin-based microporous membrane includes both the polyethylene and the polypropylene, a weight ratio between the polyethylene mixture and the polypropylene may be 85:15 to 95:5, 86:14 to 95:5, 88:12 to 95:5, or 90:10 to 95:5. In an exemplary embodiment, when the weights of the polyethylene mixture and the polypropylene are out of the range, the mechanical/physical properties and safety at a high temperature of the microporous membrane may not be implemented simultaneously, and specifically, when the weight fraction (i.e., the content) of the polypropylene is lower than the range, a melt-down temperature may not be raised to 155°C or more, or to 160°C or more. Otherwise, when the weight fraction (i.e., the content) of the polypropylene is higher than the range, gas permeability and/or strength sufficient for use as a separator of a battery may not be implemented.

In an exemplary embodiment, the polyolefin-based microporous membrane may have a thickness of, for example, 3 $\mu$m to 20 $\mu$m, 3 $\mu$m to 15 $\mu$m, 3 $\mu$m to 10 $\mu$m, 3 $\mu$m to 8 $\mu$m, 3 $\mu$m to 7 $\mu$m, or 4 $\mu$m to 8 $\mu$m. The polyolefin-based microporous membrane according to an exemplary embodiment may implement high strength and thermal safety even at a small thickness, by combining the type, the molecular weight, the melting temperature, and the weight range of polyolefin as described above.

In an exemplary embodiment, the polyolefin-based microporous membrane may have a puncture strength of, for example, 0.30 N/$\mu$m or more, 0.33 N/$\mu$m or more, 0.35 N/$\mu$m or more, or 0.40 N/$\mu$m or more, and the upper limit may be, for example, 0.80 N/$\mu$m, 0.70 N/$\mu$m, 0.60 N/$\mu$m, 0.50 N/$\mu$m, or 0.45 N/$\mu$m. The puncture strength is a value obtained by penetrating a pin tip having a diameter of 1.0 mm and a radius of curvature of 0.5 mm vertically through the separator at a speed of 120 mm/min, using a universal test machine (UTM) 3345 available from Instron, measuring a force applied at this time, and dividing the force by the thickness of the microporous membrane to calculate the value. When the polyolefin-based microporous membrane according to an exemplary embodiment having the puncture strength is used as the separator, battery safety (internal short circuit prevention, battery expansion prevention, and the like) may be effectively improved.

In an exemplary embodiment, the polyolefin-based microporous membrane may have a gas permeability of, for

example, $0.8 \times 10^{-5}$ Darcy or more (approx. $0.8 \times 10^{-5}$ $\mu m^2$ or more), $1.0 \times 10^{-5}$ Darcy or more (approx. $1.0 \times 10^{-5}$ $\mu m^2$ or more), $1.2 \times 10^{-5}$ Darcy or more (approx. $1.2 \times 10^{-5}$ $\mu m^2$ or more), $1.5 \times 10^{-5}$ Darcy or more (approx. $1.5 \times 10^{-5}$ $\mu m^2$ or more), or $1.6 \times 10^{-5}$ Darcy or more (approx. $1.6 \times 10^{-5}$ $\mu m^2$ or more), and the upper limit may be, for example, $3.0 \times 10^{-5}$ Darcy (approx. $3.0 \times 10^{-5}$ $\mu m^2$), $2.5 \times 10^{-5}$ Darcy (approx. $2.5 \times 10^{-5}$ $\mu m^2$), $2.3 \times 10^{-5}$ Darcy (approx. $2.3 \times 10^{-5}$ $\mu m^2$), $2.0 \times 10^{-5}$ Darcy (approx. $2.0 \times 10^{-5}$ $\mu m^2$), or $1.9 \times 10^{-5}$ Darcy (approx. $1.9 \times 10^{-5}$ $\mu m^2$). The gas permeability is calculated by a Darcy's permeability constant calculated by the following Mathematical Formula 2, using a CFP-1500-AEL void meter available from PMI:

[Mathematical Formula 2]

$$C = (8F \times T \times V) / \{ \pi \times D^2 (P^2 - 1) \}$$

wherein C is a Darcy permeability constant, F is a flow velocity, T is a thickness of a sample, V is a viscosity of gas (using nitrogen; 0.185), D is a diameter of a sample, and P is pressure. In an exemplary embodiment of the present disclosure, it was calculated as an average value of the Darcy's permeability constant in a range of 100 psi to 200 psi. When the microporous membrane according to an exemplary embodiment having the gas permeability is used as a separator, the high capacity and the high output of a battery may be efficiently achieved.

In an exemplary embodiment, the polyolefin-based microporous membrane may have a porosity of, for example, 30.0% or more, 31.0% or more, 33.0% or more, or 34.0% or more, and the upper limit may be, for example, 45.0%, 40.0%, 38.0%, or 37.0%. The porosity is calculated by the following Mathematical Formula 3, after cutting a microporous membrane into a rectangle of A cm in length $\times$ B cm in width having a thickness of T $\mu m$ and then measuring mass m (unit: g):

[Mathematical Formula 3]

$$Porosity = 100 \times \{ 1 - m \times 10000 / (A \times B \times T \times \rho) \}$$

wherein $\rho$ is density of a sample (unit: $g/cm^3$).

When the microporous membrane according to an exemplary embodiment having the porosity is used as a separator, the high capacity and the high output of a battery may be efficiently achieved.

In an exemplary embodiment, the polyolefin-based microporous membrane may have an average pore size of, for example, 20 nm to 50 nm, 25 nm to 45 nm, 30 nm to 50 nm, 30 nm to 45 nm, 30 nm to 40 nm, or 35 nm to 40 nm. The average pore size is calculated as an average value of values obtained by measuring by a half dry method using a CFP-1500-AEL pore meter available from PMI (Galwick solution; surface tension: 15.9 dyne/cm) in accordance with ASTM F316-03. When the microporous membrane according to an exemplary embodiment having the average pore size is used as a separator, the high capacity and the high output of a battery may be efficiently achieved.

In an exemplary embodiment, the polyolefin-based microporous membrane may have a surface roughness of 2.1 $\mu m$ or less, 2.0 $\mu m$ or less, 1.9 $\mu m$ or less, or 1.8 $\mu m$ or less, and the lower limit may be, for example, 1.0 $\mu m$, 1.2 $\mu m$, 1.4 $\mu m$, 1.5 $\mu m$, or 1.6 $\mu m$. The surface roughness is a value obtained by selecting 5 random points on a front surface and 5 random points on a back surface of the polyolefin-based microporous membrane, each having an area of 284 $\mu m$ (width) $\times$ 220 $\mu m$ (length), measuring a maximum height difference ($\mu m$, $R_{max}$) which is a difference between the highest surface height and the lowest surface height in the area of each point, and adding an average value of values measured in each of the 5 points on the front surface and an average value of values measured in each of the 5 points on the back surface. When the microporous membrane according to an exemplary embodiment having the surface roughness value is used as the separator, battery safety (internal short circuit prevention, battery expansion prevention, and the like) may be effectively improved.

The polyolefin-based microporous membrane according to an exemplary embodiment may additionally include a further polyolefin-based resin such as polybutylene, polyisobutylene, and/or poly-4-methyl-1-pentene, or a resin such as polyamide, polybutylene terephthalate, polyethylene terephthalate, polychlorotrifluoroethylene, polyoxymethylene, polyvinyl fluoride, polyvinylidene fluoride, polycarbonate, polyarylate, polysulfone, and/or polyetherimide, in addition to the polyethylene and polypropylene.

It is not considered that the puncture strength, the gas permeability, the porosity, the average pore size, the surface roughness, and possibly further characteristics of the polyolefin-based microporous membrane according to an exemplary embodiment is implemented only by any one or two factors of the weight average molecular weight, the melting temperature, or the weight ratio of the polyethylene and/or the polypropylene, and they may be adjusted by other factors and/or various conditions for manufacturing the polyolefin-based microporous membrane.

Another exemplary embodiment provides a separator for a secondary battery which has a puncture strength of 0.3 N/$\mu$m or more, a gas permeability of $0.8 \times 10^{-5}$ Darcy or more, a porosity of 30.0% or more, and a surface roughness of 2.1 $\mu$m or less, the surface roughness being a value obtained by selecting 5 random points on a front surface and 5 random points on a back surface of the separator for a secondary battery, each having an area of 284 $\mu$m (width) $\times$ 220 $\mu$m (length), measuring a maximum height difference ($\mu$m, $R_{max}$) which is a difference between the highest surface height and the lowest surface height in the area of each point, and adding an average value of values measured in each of the 5 points on the front surface and an average value of values measured in each of the 5 points on the back surface.

The separator for a secondary battery according to an exemplary embodiment may include, for example, polyethylene and/or polypropylene, and specifically, for example, may include a first polyethylene, a second polyethylene, and polypropylene. In an exemplary embodiment, the separator for a secondary battery may include a polyethylene mixture including a first polyethylene having a weight average molecular weight of $30 \times 10^4$ g/mol to $100 \times 10^4$ g/mol and a melting temperature of 133°C or higher; and a second polyethylene having a weight average molecular weight of less than $30 \times 10^4$ g/mol and a melting temperature of 126°C or lower, and may further include a polypropylene having a viscosity average molecular weight of $100 \times 10^4$ g/mol to $300 \times 10^4$ g/mol and a melting temperature of 160°C or higher.

In an exemplary embodiment, since the first polyethylene, the second polyethylene, and the polypropylene, the average molecular weight, the melting temperature, and the weight ratio thereof, and the thickness, the puncture strength, the gas permeability, the porosity, the average pore size, the surface roughness of the membrane are as described above for the polyolefin-based microporous membrane according to an exemplary embodiment, redundant description will be omitted here.

In an exemplary embodiment, the separator for a secondary battery may have a shut-down temperature of 137°C or lower, 136.5°C or lower, 136°C or lower, or 135.7°C or lower, and the lower limit may be, for example, 125°C, 128°C, 130°C, 133°C, or 135°C.

In an exemplary embodiment, the separator for a secondary battery may have a melt-down temperature of 155°C or higher, 160°C or higher, 165°C or higher, 170°C or higher, or 175°C or higher, and the upper limit may be, for example, 200°C, 190°C, 180°C, or 175°C. When the polyolefin-based microporous membrane according to an exemplary embodiment having the herein specified shut-down and melt-down temperatures is used as the separator, battery stability may be significantly improved.

It is not considered that the puncture strength, the gas permeability, the porosity, the average pore size, the surface roughness, the shut-down temperature, the melt-down temperature, or the like of the separator for a secondary battery according to an exemplary embodiment is implemented only by any one or two factors of the weight average molecular weight, the melting temperature, or the weight ratio of the polyethylene and/or the polypropylene, and they may be adjusted by other factors and/or various conditions for manufacturing the microporous membrane.

Another exemplary embodiment provides a method for manufacturing a polyolefin-based microporous membrane including:

kneading a polyolefin-based resin and a diluent to prepare a molten material;
molding the molten material into a sheet form; and
stretching the molded sheet and then extracting the diluent, wherein the polyolefin-based microporous membrane has a puncture strength of 0.3 N/$\mu$m or more, a gas permeability of $0.8 \times 10^{-5}$ Darcy or more, a porosity of 30.0% or more, and a surface roughness of 2.1 $\mu$m or less is provided, the surface roughness being a value obtained by selecting 5 random points on a front surface and 5 random points on a back surface of the polyolefin-based microporous membrane, each having an area of 284 $\mu$m (width) $\times$ 220 $\mu$m (length), measuring a maximum height difference ($\mu$m, $R_{max}$) which is a difference between the highest surface height and the lowest surface height in the area of each point, and adding an average value of values measured in each of the 5 points on the front surface and an average value of values measured in each of the 5 points on the back surface.

The separator for a secondary battery according to an exemplary embodiment may include, for example, polyethylene and/or polypropylene, and specifically, for example, may include a first polyethylene, a second polyethylene, and polypropylene. In an exemplary embodiment, the separator for a secondary battery may include a polyethylene mixture including a first polyethylene having a weight average molecular weight of $30 \times 10^4$ g/mol to $100 \times 10^4$ g/mol and a melting temperature of 133°C or higher; and a second polyethylene having a weight average molecular weight of less than $30 \times 10^4$ g/mol and a melting temperature of 126°C or lower, and may further include a polypropylene having a viscosity average molecular weight of $100 \times 10^4$ g/mol to $300 \times 10^4$ g/mol and a melting temperature of 160°C or higher.

In an exemplary embodiment, since the first polyethylene, the second polyethylene, and the polypropylene, the average molecular weight, the melting temperature, and the weight ratio thereof, and the thickness, the puncture strength, the gas permeability, the porosity, the average pore size, the surface roughness, and optionally other properties of the membrane are as described above for the microporous membrane according to an exemplary embodiment, redundant description will be omitted here.

The step of preparing a molten material may be, specifically a step of melting and kneading a polyolefin-based resin and a diluent through an extruder to prepare a molten material which is a thermodynamically single phase.

In an exemplary embodiment, the type of diluent is not particularly limited, and may be any organic compound which forms a single phase with the polyolefin-based resin (or a mixture of the polyolefin-based resin and other types of resins) during extrusion. A non-limiting example of the diluent may include, for example, aliphatic or cyclic hydrocarbons such as liquid paraffin including nonane, decane, decaline, and liquid paraffin (or paraffin oil), and paraffin wax; phthalate ester such as dibutyl phthalate and dioctyl phthalate; fatty acids having 10 to 20 carbon atoms such as palmitic acid, stearic acid, oleic acid, linoleic acid, and linolenic acid; fatty acid alcohols having 10 to 20 carbon atoms such as palmitic alcohol, stearyl alcohol, and oleyl alcohol; and the like. They may be used alone or in combination of two or more, and specifically, among the diluents, liquid paraffin which is an example of a low-molecular weight organic material having the similar molecular structure to polyolefin may be used.

In an exemplary embodiment, a weight ratio between the polyolefin-based resin and the diluent may be, for example, 15:85 to 55:45, 20:80 to 50:50, or 30:70 to 40:60. When the weight ratio between the polyolefin-based resin and the diluent is in the range of 15:85 to 55:45, the resulting polyolefin-based microporous membrane may exhibit a porosity in the range of 30.0% to 60.0%.

In an exemplary embodiment, the sheet stretching may be a step of stretching in the machine direction (MD) and the transverse direction (TD) by 6 times or more, and for example, may be a step of stretching by 6 to 10 times, 6 to 9 times, 6 to 8 times, about 6 times, about 7 times, or about 8 times, and stretching in the transverse direction (TD) may be performed after stretching in the machine direction (MD).

In an exemplary embodiment, after extracting the diluent, a step of drying the sheet to a shrinkage in the machine direction (MD) of 5% or less and a shrinkage in the transverse direction (TD) of 10% or less may be further included. Otherwise, for example, it may be a step of drying the sheet to the shrinkages of independently of each other 9% or less, 8% or less, 7% or less, 6% or less, or 5% or less in the machine direction (MD) and in the transverse direction (TD), and specifically, may be a step of drying the sheet to the shrinkage of 1% to 6%, 2% to 6%, 3% to 6%, 3% to 5%, or 3% to 4% in the machine direction (MD) and 4% to 10%, 4% to 8%, 5% to 8%, or 6% to 8% in the transverse direction (TD) .

In an exemplary embodiment, a heat treatment step may be further included after the drying, and the heat treatment step may include stretching, heat fixation, and/or heat mitigation.

Herein, when a heat treatment temperature is T, T may satisfy the following Equation 1:

$$(\text{Melting temperature of second polyethylene}) \leq T \leq (\text{melting temperature of second polyethylene} + 10°C) \qquad \text{[Equation 1]}$$

Specifically, in Equation 1, the upper limit of T may be (melting temperature of second polyethylene + 8°C), (melting temperature of second polyethylene + 6°C), (melting temperature of second polyethylene + 5°C), (melting temperature of second polyethylene + 4°C), or (melting temperature of second polyethylene + 3°C).

In the method for manufacturing a polyolefin-based microporous membrane according to an exemplary embodiment, when the heat treatment is performed at a temperature higher than the melting temperature of the second polyethylene by at least 10°C, flowability of the resin may be excessively increased to block pores, and high gas permeability and/or porosity for use in the separator for a secondary battery may be implemented.

In an exemplary embodiment, the polyolefin-based microporous membrane may be a separator for a secondary battery.

Another exemplary embodiment provides a secondary battery including the separator for a secondary battery according to the exemplary embodiment.

In an exemplary embodiment, the secondary battery may have a capacity retention rate of 95% or more, 96% or more, 97% or more, or 98% or more. The capacity retention rate is a value obtained by charging/discharging a battery for 100 cycles from 2.7 V (constant current) to 4.3 V (constant current constant voltage) at 0.1 C in the first cycle, 0.2 C in the second cycle, and 0.5 C from the third cycle, and measuring a capacity change after 100 cycles from the initial capacity.

In an exemplary embodiment, the secondary battery may have an initial electrical resistance value of 75 mΩ or less, 73 mΩ or less, or 70 mΩ or less. In an exemplary embodiment, the thickness-normalized initial electrical resistance of the secondary battery may be about 15.5 mΩ/μm or less.

An exemplary embodiment provides a secondary battery including a positive electrode; a negative electrode opposite to the positive electrode; and the separator for a secondary battery according to an exemplary embodiment.

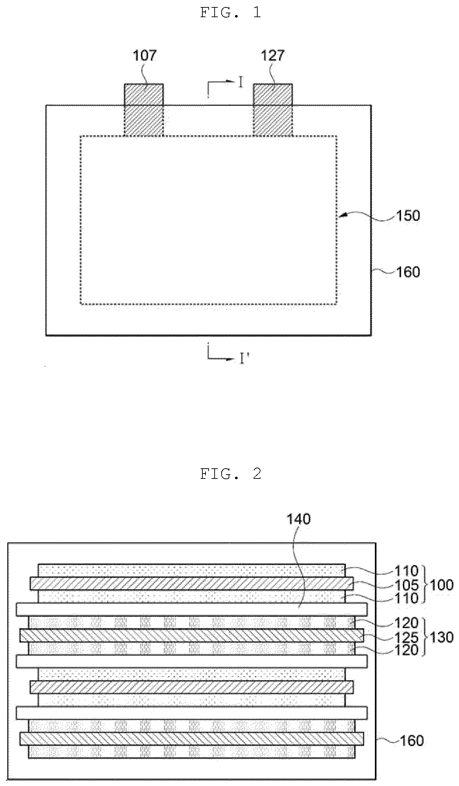

FIGS. 1 and 2 are schematic plan view and cross-sectional view showing the secondary batteries according to exemplary embodiments, respectively. For example, FIG. 2 is a cross-sectional view taken along the line I-I' of FIG. 1.

Referring to FIGS. 1 and 2, the secondary battery may include a positive electrode 100 and a negative electrode 130 opposite to the positive electrode 100.

The positive electrode 100 may include a positive electrode current collector 105 and a positive electrode active material layer 110 on the positive electrode current collector 105.

The positive electrode active material layer 110 may include a positive electrode active material, and, if necessary, a positive electrode binder and a conductive material.

The positive electrode 100 may be manufactured by, for example, mixing a positive electrode active material, a positive electrode binder, a conductive material, a dispersion medium, and the like and stirring to prepare a positive electrode slurry, and applying the slurry on the positive electrode current collector 105, drying, and rolling.

The positive electrode current collector 105 may include, for example, stainless steel, nickel, aluminum, titanium, copper, or an alloy thereof, and more preferably, may include aluminum or an aluminum alloy.

In an exemplary embodiment, the secondary battery may be a lithium secondary battery, and for example, may be a lithium metal secondary battery, a lithium-ion secondary battery, a lithium polymer secondary battery, a lithium ion polymer secondary battery, or the like.

Hereinafter, the secondary battery according to an exemplary embodiment will be schematically described.

[Positive electrode]

A positive electrode may include a positive electrode current collector and a positive electrode mixture layer placed on at least one surface of the positive electrode current collector.

(Positive electrode current collector)

The positive electrode current collector may include stainless steel, nickel, aluminum, titanium, or an alloy thereof. The positive electrode current collector may include carbon, nickel, titanium, or aluminum which is surface treated with silver, or stainless steel. Though the positive electrode current collector is not limited thereto, the thickness of the positive electrode current collector may be, for example, 10 $\mu$m to 50 $\mu$m.

(Positive electrode material)

A positive electrode mixture layer may include a positive electrode active material. The positive electrode active material may include a compound which may reversibly intercalate and de-intercalate lithium ions.

According to exemplary embodiments, the positive electrode active material may include a lithium-nickel metal oxide. The lithium-nickel metal oxide may further include at least one of cobalt (Co), manganese (Mn), and aluminum (Al).

In some exemplary embodiments, the positive electrode active material or the lithium-nickel metal oxide may include a layered structure, or a crystal structure represented by the following Chemical Formula 1:

[Chemical Formula 1] $\qquad Li_xNi_aM_bO_{2+z}$

wherein $0.9 \leq x \leq 1.2$, $0.6 \leq a \leq 0.99$, $0.01 \leq b \leq 0.4$, and $-0.5 \leq z \leq 0.1$. As described above, M may include Co, Mn, and/or Al.

The chemical structure represented by Chemical Formula 1 shows a bonding relationship included in the layered structure or the crystal structure of the positive electrode active material, and it does not mean that other additional elements are excluded. For example, M includes Co and/or Mn, and Co and/or Mn may be provided as a main active element of the positive electrode active material with Ni. Chemical Formula 1 is provided for expressing the bonding relationship of the main active elements and should be understood as a formula covering introduction of an additional element and substitution.

In an exemplary embodiment, auxiliary elements which are added to the main active elements to enhance chemical stability of the positive electrode active material, or the layered structure/crystal structure may be further included. The auxiliary element may be incorporated into the layered structure/crystal structure and form a bond, and in this case also, should be understood to be included in the range of the chemical structure represented by Chemical Formula 1.

The auxiliary element may include, for example, at least one of Na, Mg, Ca, Y, Ti, Hf, V, Nb, Ta, Cr, Mo, W, Fe, Cu, Ag, Zn, B, Al, Ga, C, Si, Sn, Sr, Ba, Ra, P, or Zr. The auxiliary element may act as, for example, an auxiliary active element which contributes to the capacity/output activity of the positive electrode active material with Co or Mn, like Al.

For example, the positive electrode active material or the lithium-nickel metal oxide may include a layered structure or a crystal structure represented by the following Chemical Formula 1-1:

[Chemical Formula 1-1] $\qquad Li_xNi_aM1_{b1}M2_{b2}O_{2+z}$

wherein M1 includes Co, Mn, and/or Al, M2 includes the auxiliary elements described above, and $0.9 \leq x \leq 1.2$, $0.6 \leq a \leq 0.99$, $0.01 \leq b1+b2 \leq 0.4$, and $-0.5 \leq z \leq 0.1$ are satisfied.

The positive electrode active material may further include a coating element or a doping element. For example, elements which are substantially identical or similar to the auxiliary elements described above may be used as a coating element or a doping element. For example, among the elements described above, a single element or a combination of two or more elements may be used as a coating element or a doping element.

The coating element or the doping element may be present on the surface of the lithium-nickel metal oxide particles, or may be penetrated through the surface of the lithium-nickel metal oxide particles and included in the combined structure represented by Chemical Formula 1 or Chemical Formula 1-1.

The positive electrode active material may include a nickel-cobalt-manganese (NCM)-based lithium oxide. In this case, an NCM-based lithium oxide having an increased nickel content may be used.

Ni may be provided as a transition metal related to the output and the capacity of a lithium secondary battery. Therefore, as described above, since a high-content (high-Ni) composition is adopted into the positive electrode active material, a high-capacity positive electrode and a high-capacity lithium secondary battery may be provided.

However, as the content of Ni increases, the long-term preservation stability and the life stability of the positive electrode or the secondary battery may be relatively reduced, and a side reaction with an electrolyte may be increased. However, according to exemplary embodiments, the life stability and the capacity retention properties may be improved by Mn while maintaining the electrical conductivity by including Co.

The content of Ni in the NCM-based lithium oxide (for example, the mole fraction of nickel of the total moles of nickel, cobalt, and manganese) may be 0.6 or more, 0.7 or more, or 0.8 or more. In some exemplary embodiment, the content of Ni may be 0.8 to 0.95, 0.82 to 0.95, 0.83 to 0.95, 0.84 to 0.95, 0.85 to 0.95, or 0.88 to 0.95.

In some exemplary embodiments, the positive electrode active material may include a lithium cobalt oxide-based active material, a lithium manganese oxide-based active material, a lithium nickel oxide-based active material, or a lithium iron phosphate (LFP)-based active material (for example, $LiFePO_4$).

In some exemplary embodiments, the positive electrode active material may include a Mn-rich-based active material having a chemical structure or crystal structure represented by Chemical Formula 2, a Li rich layered oxide (LLO)/over lithiated oxide (OLO)-based active material, or a Co-less-based active material:

$$[\text{Chemical Formula 2}] \qquad p[Li_2MnO_3] \cdot (1-p) [Li_qJO_2]$$

wherein $0<p<1$, $0.9 \leq q \leq 1.2$, and J includes at least one element of Mn, Ni, Co, Fe, Cr, V, Cu, Zn, Ti, Al, Mg, and B.

(Method for manufacturing positive electrode)

For example, the positive electrode active material may be mixed into the solvent to prepare a positive electrode slurry. After coating the positive electrode current collector with the positive electrode slurry, drying and rolling may be performed to manufacture a positive electrode mixture layer. The coating process may be performed by a method such as gravure coating, slot die coating, multilayer simultaneous die coating, imprinting, doctor blade coating, dip coating, bar coating, and casting, but is not limited thereto. The positive electrode mixture layer may further include a binder, and may optionally further include a conductive material, a thickener, and the like. Herein, the binder and the conductive material are as described above.

(Positive electrode solvent)

A non-limiting example of the solvent used in the preparation of the positive electrode mixture may include N-methyl-2-pyrrolidone (NMP), dimethyl formamide, dimethyl acetamide, N,N-dimethylaminopropylamine, ethylene oxide, tetrahydrofuran, isobutyl butyrate, butyl butyrate, xylene, anisole, and the like.

(Positive electrode binder)

The binder may include a non-water-based binder and/or a water-based binder, or rubber-based binder and/or fluorine-based binder, and for example, may include polyvinylidene fluoride (PVDF), poly(vinylidene fluoride-co-hexafluoropropylene (PVDF-HFP), polyacrylonitrile, polymethylmethacrylate, acrylonitrile butadiene rubber (NBR), polybutadiene rubber (BR), styrene-butadiene rubber (SBR), and the like. In an exemplary embodiment, a PVDF-based binder may be used as a positive electrode binder.

(Positive electrode conductive material)

The conductive material may be added for increasing conductivity of the positive electrode mixture layer and/or mobility of lithium ions or electrons. For example, the conductive material may be a linear conductive material and/or a dot-shaped conductive material, and for example, may include carbon-based conductive materials such as graphite, carbon black, acetylene black, ketjen black, graphene, carbon nanotubes, vapor-grown carbon fiber (VGCF), carbon fiber, and carbon nanofiber, and/or metal-based conductive materials including tin, tin oxide, titanium oxide, perovskite materials such as $LaSrCoO_3$ and $LaSrMnO_3$, and the like, but is not limited thereto.

(Positive electrode thickener/ dispersant)

If necessary, the positive electrode mixture may further include a thickener and/or a dispersant and the like. As an exemplary embodiment, the positive electrode mixture may include a thickener such as carboxymethyl cellulose (CMC).

[Negative electrode]

The negative electrode may include a negative electrode current collector, and a negative electrode mixture layer placed on at least one surface of the negative electrode current collector.

(Negative electrode current collector)

A non-limiting example of the negative electrode current collector may include a copper foil, a nickel foil, a stainless-steel foil, a titanium foil, a nickel foam, a copper foam, a polymer substrate coated with a conductive metal, and the like. The negative electrode current collector is not limited, but the thickness of the negative electrode current collector may be, for example, 10 to 50 $\mu$m.

(Negative electrode material)

The negative electrode mixture layer may include a negative electrode active material. As the negative electrode active material, a material cap able of adsorbing or desorbing lithium ions may be used. For example, the negative electrode active material may be a carbonaceous material such as crystalline carbon, amorphous carbon, carbon composite, and carbon fiber; lithium metal; lithium alloy; a silicon (Si)-containing material, a tin (Sn)-containing material, or the like.

An example of the amorphous carbon may include hard carbon, soft carbon, coke, mesocarbon microbead (MCMB), mesophase pitch-based carbon fiber (MPCF), and the like.

An example of the crystalline carbon may include graphite-based carbon such as natural graphite, artificial graphite, graphitized coke, graphitized MCMB, and graphitized MPCF.

The lithium metal may include a pure lithium metal or a lithium metal on which a protective layer is formed for suppressing dendrite growth. In an exemplary embodiment, a lithium metal-containing layer which is deposited or coated on a negative electrode current collector may be used as a negative electrode active material. In an exemplary embodiment, a lithium thin film layer may be used as a negative electrode active material layer.

An element included in the lithium alloy may include aluminum, zinc, bismuth, cadmium, antimony, silicon, lead, tin, gallium, indium, or the like.

The silicon-containing material may provide more increased capacity characteristics. The silicon-containing material may include Si, $SiO_x$ (0<x<2), metal-doped $SiO_x$ (0<x<2), a silicon-carbon composite, and the like. The metal may include lithium and/or magnesium, and the metal-doped $SiO_x$ (0<x<2) may include metal silicate.

(Method for manufacturing negative electrode)

For example, the negative electrode active material may be mixed into the solvent to prepare a negative electrode slurry. After coating/depositing the negative electrode current collector with the negative electrode slurry, drying and rolling may be performed to manufacture a negative electrode mixture layer. The coating process may be performed by a method such as gravure coating, slot die coating, multilayer simultaneous die coating, imprinting, doctor blade coating, dip coating, bar coating, and casting, but is not limited thereto. The negative electrode mixture layer may further include a binder, and may optionally further include a conductive material, a thickener, and the like.

In some exemplary embodiments, the negative electrode may include a negative electrode active material layer in a lithium metal form formed by a deposition/coating process.

(Negative electrode solvent)

A non-limiting example of the solvent for a negative electrode mixture may include water, pure water, deionized water, distilled water, ethanol, isopropanol, methanol, acetone, n-propanol, t-butanol, isobutyl isobutyrate, butyl butyrate, xylene, anisole, and the like.

(Negative electrode binder/ conductive material/ thickener)

As the binder, the conductive material, and the thickener, the materials described above which may be used in the manufacture of a positive electrode may be used.

In some exemplary embodiments, rubber-based binder such as a styrene-butadiene rubber (SBR)-based binder, carboxymethyl cellulose (CMC), a polyacrylic acid-based binder, a poly(3,4-ethylenedioxythiophene) (PEDOT)-based binder, and the like may be used as a negative electrode binder.

[Electrode assembly]

According to exemplary embodiments, the positive electrode, the negative electrode, and the separator may be repeatedly disposed to form an electrode assembly. In some exemplary embodiments, the electrode assembly may be a winding type, a stacking type, a zigzag (z)-folding type, or a stack-folding type.

[Electrolyte solution]

A lithium secondary battery may be defined by housing the electrode assembly in a case with an electrolyte solution. According to exemplary embodiments, a nonaqueous electrolyte solution may be used as the electrolyte solution.

(Lithium salt/ organic solvent)

A nonaqueous electrolyte solution includes a lithium salt as an electrolyte and an organic solvent, the lithium salt is represented by, for example, $Li^+X^-$, and an example of an anion ($X^-$) of the lithium salt may include $F^-$, $Cl^-$, $Br^-$, $I^-$, $NO_3^-$, $N(CN)_2^-$, $BF_4^-$, $ClO_4^-$, $PF_6^-$, $(CF_3)_2PF_4^-$, $(CF_3)_3PF_3^-$, $(CF_3)_4PF_2^-$, $(CF_3)_5PF^-$, $(CF_3)_6P^-$, $CF_3SO_3^-$, $CF_3CF_2SO_3^-$, $(CF_3SO_2)_2N^-$, $(FSO_2)_2N^-$, $CF_3CF_2(CF_3)_2CO^-$, $(CF_3SO_2)_2CH^-$, $(SF_5)_3C^-$, $(CF_3SO_2)_3C^-$, $CF_3(CF_2)_7SO_3^-$, $CF_3CO_2^-$, $CH_3CO_2^-$, $SCN^-$, $(CF_3CF_2SO_2)_2N^-$, and the like.

The organic solvent has sufficient solubility of the lithium salt or the additive, and may include an organic compound having no reactivity in a battery. The organic solvent may include, for example, at least one of carbonate-based solvents, ester-based solvents, ether-based solvents, ketone-based solvents, alcohol-based solvents, and aprotic solvents. An example of the organic solvent may include propylene carbonate (PC), ethylene carbonate (EC), butylene carbonate, diethyl carbonate (DEC), dimethyl carbonate (DMC), ethyl methyl carbonate (EMC), methyl propyl carbonate, ethyl propyl carbonate, dipropyl carbonate, vinylene carbonate, methyl acetate (MA), ethyl acetate (EA), n-propylacetate (n-PA), 1,1-dimethylethyl acetate (DMEA), methyl propionate (MP), ethyl propionate (EP), fluoroethyl acetate (FEA), difluoroethyl acetate (DFEA), trifluoroethyl acetate (TFEA), dibutyl ether, tetraethylene glycol dimethyl ether (TEGDME), diethylene glycol dimethyl ether (DEGDME), dimethoxyethane, tetrahydrofuran (THF) and 2-methyltetrahydrofuran, ethyl alcohol, isopropyl alcohol, dimethylsulfoxide, acetonitrile, diethoxyethane, sulfolane, gamma-butyrolactone, propylene sulfite, and the like. These may be used alone or in combination of two or more.

(Additive)

The nonaqueous electrolyte solution may further include an additive. The additive may include, for example, cyclic carbonate-based compounds, fluorine-substituted carbonate-based compounds, sultone-based compounds, cyclic sulfate-based compounds, cyclic sulfite-based compounds, phosphate-based compounds, and borate-based compounds.

The cyclic carbonate-based compound may include vinylene carbonate (VC), vinylethylene carbonate (VEC), or the like.

The fluorine-substituted carbonate-based compound may include fluoroethylene carbonate (FEC) and the like.

The sultone-based compound may include 1,3-propane sultone, 1,3-propene sultone, 1,4-butane sultone, and the like.

The cyclic sulfate-based compound may include 1,2-ethylene sulfate, 1,2-propylene sulfate, and the like.

The cyclic sulfite-based compound may include ethylene sulfite, butylene sulfite, and the like.

The phosphate-based compound may include lithium difluoro bis-oxalato phosphate, lithium difluoro phosphate, and the like.

The borate-based compound may include lithium bis(oxalate) borate and the like.

[Solid electrolyte]

In some exemplary embodiment, a solid electrolyte may be used instead of the nonaqueous electrolyte solution described above. In this case, the lithium secondary battery may be manufactured in an all-solid-state battery form. In addition, a solid electrolyte layer may be placed between the positive electrode and the negative electrode, instead of the separator described above.

The solid electrolyte may include a sulfide-based electrolyte. As a non-limiting example, the sulfide-based electrolyte may include $Li_2S-P_2S_5$, $Li_2S-P_2S_5-LiCl$, $Li_2S-P_2S_5-LiBr$, $Li_2S-P_2S_5-LiCl-LiBr$, $Li_2S-P_2S_5-Li_2O$, $Li_2S-P_2S_5-Li_2O-LiI$, $Li_2S-SiS_2$, $Li_2S-SiS_2-LiI$, $Li_2S-SiS_2-LiBr$, $Li_2S-SiS_2-LiCl$, $Li_2S-SiS_2-B_2S_3-LiI$, $Li_2S-SiS_2-P_2S_5-LiI$, $Li_2S-B_2S_3$, $Li_2S-P_2S_5-Z_mS_n$ (m and n are positive numbers, and Z is Ge, Zn, or Ga), $Li_2S-GeS_2$, $Li_2S-SiS_2-Li_3PO_4$, $Li_2S-SiS_2-Li_pMO_q$, (p and q are positive numbers, and M is P, Si, Ge, B, Al, Ga, or In), $Li_{7-x}PS_{6-x}Cl_x$ ($0 \leq x \leq 2$), $Li_{7-x}PS_{6-x}Br_x$ ($0 \leq x \leq 2$), $Li_{7-x}PS_{6-x}I_x$ ($0 \leq x \leq 2$), and the like. These may be used alone or in combination of two or more.

In an exemplary embodiment, the solid electrolyte may include, for example, an oxide-based amorphous solid electrolyte such as $Li_2O-B_2O_3-P_2O_5$, $Li_2O-SiO_2$, $Li_2O-B_2O_3$, and $Li_2O-B_2O_3-ZnO$.

[Cell structure]

For example, electrode tabs (positive electrode tab and negative electrode tab) may protrude from the positive electrode current collector and the negative electrode current collector and extend to one side of a case, respectively. The electrode tabs may be connected to electrode leads (positive electrode lead and negative electrode lead) which are fused with the one side of the case and extended or exposed to the outside of the case. For example, a pouch-type case, an angular case, a cylindrical case, a coin-type case, and the like may be used.

Hereinafter, the examples will be further described with reference to the specific experimental examples. It is apparent to those skilled in the art that the examples and the comparative examples included in the experimental examples only illustrate an exemplary embodiment and do not limit the appended claims, and various modifications and alterations of the examples may be made within the range of the scope and spirit of the present disclosure, and these modifications and alterations will fall within the appended claims.

**Test method**

1. Weight average molecular weight (Mw, unit: g/mol)

The weight average molecular weight of polyethylene was measured with high temperature gel permeation chromatography (GPC) available from Agilent Technologies, and the used column was PLgel Guard + Olexis.

2. Viscosity average molecular weight (Mv, unit: g/mol)

The viscosity average molecular weight of polypropylene was calculated from the following Mathematical Formula 1 after measuring an intrinsic viscosity using a Crystex® model available from Polymer Char. A tri-chloro-benzene (TCB) solvent was used for measuring intrinsic viscosity.

$$[\text{Mathematical Formula 1}]$$

$$Mv = 5.37 \times 10^4 \times [\eta]^{1.49}$$

wherein Mv is viscosity average molecular weight, and $\eta$ is intrinsic viscosity.

3. Melting temperature (Tm, unit: °C)

The melting temperature was determined from a peak position in a curve measured by scanning 5 mg of a sample in a temperature range from 25°C to 200°C at a heating rate of 10°C/min under a nitrogen atmosphere with a differential scanning calorimeter (DSC).

4. Thickness of film (unit: $\mu$m)

The thickness was measured with a measurement pressure of 0.63 N, using TESA Mu-Hite Electronic Height Gauge available from TESA which is a contact-type thickness gauge having a thickness accuracy of 0.1 $\mu$m.

5. Puncture strength (unit: N/$\mu$m)

The puncture strength was calculated by penetrating a pin tip having a diameter of 1.0 mm and a radius of curvature of 0.5 mm vertically through the separator at a speed of 120 mm/min, using a universal test machine (UTM) 3345 available from Instron, measuring a force applied at this time, and dividing the force by the thickness measured by the method of 4.

6. Gas permeability (unit: Darcy)

The gas permeability was calculated by a Darcy's permeability constant calculated by following Mathematical Formula 2, using a CFP-1500-AEL void meter available from PMI:

$$[\text{Mathematical Formula 2}]$$

$$C = (8F \times T \times V) / \{\pi \times D^2 (P^2 - 1)\}$$

F = flow velocity (in cc/cm)
T = sample thickness (in mm)
V = viscosity of gas (0.185 cP, or 18.5 $\mu$Pa·s at 20 °C for N2)
D = diameter of sample (in mm)
P = pressure (in psi)
wherein C is a Darcy permeability constant, F is a flow velocity, T is a thickness of a sample, V is a viscosity of gas (using nitrogen; 0.185), D is a diameter of a sample, and P is pressure. At this time, in the case of the following examples, it was calculated as an average value of the Darcy's permeability constant in a range of 100 psi to 200 psi.

7. Porosity (unit: %)

The porosity was calculated by the following Mathematical Formula 3, after cutting a sample into a rectangle of A cm in length $\times$ B cm in width having a thickness of T $\mu$m and then measuring mass m (unit: g):

$$[\text{Mathematical Formula 3}]$$

$$\text{Porosity} = 100 \times \{1 - m \times 10000 / (A \times B \times T \times \rho)\}$$

wherein $\rho$ is density of a sample (unit: g/cm$^3$).

8. Average pore size (unit: nm)

The average pore size was calculated as an average value of values obtained by measuring by a half dry method using a CFP-1500-AEL pore meter available from PMI (Galwick solution; surface tension: 15.9 dyne/cm) in accordance with ASTM F316-03.

9. Surface roughness (unit: $\mu$m)

The surface roughness was measured by a confocal microscope of a VK9710 model available from KEYENCE. The measurement was performed by using a 50$\times$ optical lens, and 5 random points on the front surface (area of 284 $\mu$m (length) $\times$ 220 $\mu$m (width) per one point) and 5 random points on the back surface (area of 284 $\mu$m (length) $\times$ 220 $\mu$m (width) per one point) of a film were selected, a maximum height difference ($\mu$m, $R_{max}$), that is, a difference between a height of the highest surface and a height of the lowest surface, measured in each point was measured, and an average value of the maximum height difference measured in the 5 points on the front surface and an average value of the maximum height difference measured on the back surface were added and indicated.

10. Shut-down temperature and melt-down temperature (unit: °C)

The shut-down temperature and the melt-down temperature were measured in a simple cell where impedance may be measured. As the simple cell, a separator sample was cut into 2.5 cm $\times$ 2.5 cm, placed between glass cells, and fixed with a clip. The sample was firmly fixed with the clip so that the cell binding site was not moved, and an electrolyte solution was injected carefully so that no bubbl6es existed. The used electrolyte solution was a liquid electrolyte in which hexafluorophosphate ($LiPF_6$) was diluted in a propylene carbonate electrolyte solution at a concentration of 1 M. An aluminum electrode was placed in the cell to complete the cell, the assembled cell was placed in an oil bath preheated to 120°C, and the two electrodes were connected to a resistance meter (ZIVE SP2 available from ZIVE Lab). The electrical resistance value was measured while heating the oil bath at a rate of 2°C/min. The measurement of the electrical resistance value used alternating current of 1 kHz (5 mV). While the electrical resistance value depending on temperature was measured, the temperature when the electrical resistance was increased to 1000 $\Omega$ or more was set as a shut-down temperature, and the temperature when the electrical resistance was maintained at 1000 $\Omega$ or more and then lowered to 1000 $\Omega$ or less again was set as a melt-down temperature,

11. Hot-box evaluation

The hot-box evaluation was performed using an assembled battery to which a polyolefin-based microporous membrane was applied as a separator. Specifically, a positive electrode using NCM 622 (Ni:Co:Mn = 6:2:2) as an active material and a negative electrode using graphite carbon as an active material were wound with a manufactured microporous membrane and added to an aluminum pouch, an electrolyte solution of 1 M lithium hexafluorophosphate ($LiPF_6$) dissolved in a solution including ethylene carbonate, ethyl methyl carbonate, and diethyl carbonate at a volume ratio of 3:5:2 was injected thereinto, and the pouch was sealed, thereby assembling a battery having a capacity of 2 Ah. The assembled battery was subjected to aging and degassing operations, fully charged to 4.2 V, put into an oven, heated at 5°C/min to reach 130 °C, allowed to stand for 30 minutes, and measured a battery change. After allowing the battery to stand at 130 °C for 30 minutes, when fuming or ignition occurred in the battery, it was determined as "fail", and when no change in voltage/current of the battery and fuming and ignition did not occur, it was determined as "pass".

12. Life evaluation

Life evaluation was performed using a 2 Ah battery assembled in 11. The assembled battery was charged/-discharged for 100 cycles from 2.7 V (constant current) to 4.3 V (constant current constant voltage) at 0.1 C in the first cycle, 0.2 C in the second cycle, and 0.5 C from the third cycle, and evaluated whether a capacity change (capacity retention rate) after 100 cycles from the initial capacity was maintained at 95% or higher. When the capacity retention rate after 100 cycles was 95% or lower, the life of the battery in actual use which was charged/discharged 500-600 times or more was considered to be decreased.

13. Initial electrical resistance evaluation

The initial resistance evaluation was performed using a 2 Ah battery assembled in 11. When the initial electrical resistance was 75 m$\Omega$ or less, the capacity was maintained at 50% or more in a 1C-rate discharge test, and thus, the initial resistance value was an evaluation indicator for output characteristics.

**<Example 1>**

A polyethylene mixture including 75 wt% of a first polyethylene (PE-I) having a weight average molecular weight (Mw) of $60\times10^4$ g/mol and a melting temperature (Tm) of 134°C and 25 wt% of a second polyethylene (PE-II) having a weight average molecular weight (Mw) of $14\times10^4$ g/mol and a melting temperature (Tm) of 124°C and a polyolefin resin composition including a polypropylene having a viscosity average molecular weight (Mv) of $150\times10^4$ g/mol and a melting temperature of 164°C were prepared, and at this time, the polyethylene mixture and the polypropylene were included at 90 wt% and 10 wt%, respectively.
27 wt% of the polyolefin resin composition and 73 wt% of a diluent were melted and kneaded through an extruder to prepare a molten material which was a thermodynamically single phase, and then the molten material was molded into a sheet form using a cooling roll. Next, the sheet was stretched 8 times in the machine direction (MD) at 90°C and in the transverse direction (TD) at 120°, respectively, the diluent was extracted, and the sheet was moved and dried with a drying roll. The drying was performed so that the sheet was shrunk by 3% in the machine direction (MD) and by 6% in the transverse direction (TD). Next, the sheet was fixed with heat at 127°C to manufacture a microporous membrane having a thickness of 4.9 μm.

<Examples 2 to 6>

Microporous membranes were manufactured by the manufacturing method of Example 1, and the detailed compositions and process conditions of the polyolefin resins are shown in the following Tables 1 and 4.

<Comparative Examples 1 to 14>

Microporous membranes were manufactured by the manufacturing method of Example 1, and the detailed compositions and process conditions of the polyolefin resins are shown in the following Tables 2, 3, and 4.

[Table 1]

| Example No. | Polyethylene (PE) mixture | | | | | | | Polypropylene (PP) | | |
| | PE-I | | | PE-II | | | Content | Mv | Tm | Content |
| | Mw | Tm | Content | Mw | Tm | Content | | | | |
| 1 | 60 | 134 | 75 | 14 | 124 | 25 | 90 | 150 | 164 | 10 |
| 2 | 40 | 133 | 65 | 18 | 125 | 35 | 90 | 100 | 166 | 10 |
| 3 | 80 | 135 | 80 | 10 | 122 | 20 | 90 | 180 | 161 | 10 |
| 4 | 60 | 134 | 70 | 18 | 125 | 30 | 93 | 200 | 168 | 7 |
| 5 | 100 | 134 | 75 | 10 | 122 | 25 | 86 | 150 | 164 | 14 |
| 6 | 40 | 133 | 65 | 23 | 125 | 35 | 88 | 230 | 164 | 12 |

[Table 2]

| Comparative Example No. | Polyethylene (PE) mixture | | | | | | | Polypropylene (PP) | | |
| | PE-I | | | PE-II | | | Content | Mv | Tm | Content |
| | Mw | Tm | Content | Mw | Tm | Content | | | | |
| 1 | 100 | 134 | 90 | 14 | 124 | 10 | 90 | 150 | 164 | 10 |
| 2 | 60 | 134 | 75 | 14 | 124 | 25 | 96 | 150 | 164 | 4 |
| 3 | 60 | 134 | 75 | 14 | 124 | 25 | 90 | 150 | 164 | 10 |
| 4 | 80 | 135 | 100 | - | - | - | 90 | 150 | 164 | 10 |
| 5 | - | - | - | 14 | 124 | 100 | 90 | 150 | 164 | 10 |
| 6 | 25 | 132 | 75 | 14 | 124 | 25 | 90 | 100 | 165 | 10 |
| 7 | 60 | 134 | 75 | 40 | 133 | 25 | 90 | 150 | 164 | 10 |

[Table 3]

| Comparative Example No. | Polyethylene (PE) mixture | | | | | | | Polypropylene (PP) | | |
| | PE-I | | | PE-II | | | Content | Mv | Tm | Content |
| | Mw | Tm | Content | Mw | Tm | Content | | | | |
| 8 | 60 | 130 | 75 | 14 | 124 | 25 | 90 | 150 | 164 | 10 |
| 9 | 60 | 134 | 75 | 15 | 128 | 25 | 90 | 150 | 164 | 10 |
| 10 | 60 | 134 | 75 | 14 | 124 | 25 | 90 | 100 | 155 | 10 |
| 11 | 60 | 134 | 75 | 14 | 124 | 25 | 85 | 80 | 164 | 15 |

(continued)

| Comparative Example No. | Polyethylene (PE) mixture | | | | | | | Polypropylene (PP) | | |
| --- | --- | --- | --- | --- | --- | --- | --- | --- | --- | --- |
| | PE-I | | | PE-II | | | Content | Mv | Tm | Content |
| | Mw | Tm | Content | Mw | Tm | Content | | | | |
| 12 | 60 | 134 | 75 | 14 | 124 | 25 | 90 | 30 | 161 | 10 |
| 13 | 60 | 134 | 50 | 14 | 124 | 50 | 90 | 150 | 164 | 10 |
| 14 | 60 | 134 | 75 | 14 | 124 | 25 | 90 | 320 | 134 | 10 |

In Tables 1 to 3, PE-I is the first polyethylene, PE-II is the second polyethylene, Mw is the weight average molecular weight and the unit is $\times 10^4$ g/mol, Tm is the melting temperature and the unit is °C, Mv is the viscosity average molecular weight and the unit is $\times 10^4$ g/mol, the content of PE-I and the content of PE-II are each wt% based on the total weight of the polyethylene mixture, and the contents of the polyethylene mixture and the polypropylene are each wt% based on the total weight thereof.

[Table 4]

| | MD stretching ratio | TD stretching ratio | Shrinkage rate (MD/TD, %) | Heat fixation temperature (°C) | Thickness (μm) |
| --- | --- | --- | --- | --- | --- |
| Example 1 | 8.0 | 8.0 | 3/6 | 127 | 4.9 |
| Example 2 | 8.0 | 8.0 | 3/6 | 127 | 5.1 |
| Example 3 | 7.0 | 7.0 | 3/6 | 126 | 6.3 |
| Example 4 | 7.0 | 7.0 | 4/8 | 128 | 6.2 |
| Example 5 | 7.5 | 7.5 | 3/6 | 126 | 5.5 |
| Example 6 | 8.0 | 8.0 | 3/6 | 126 | 4.8 |
| Comparative Example 1 | 7.0 | 7.0 | 3/6 | 131 | 5.9 |
| Comparative Example 2 | 6.0 | 8.0 | 4/8 | 128 | 6.3 |
| Comparative Example 3 | 7.0 | 7.0 | 8/14 | 130 | 4.0 |
| Comparative Example 4 | 8.0 | 8.0 | 3/6 | 134 | 5.2 |
| Comparative Example 5 | 7.0 | 7.0 | 3/6 | 125 | 5.0 |
| Comparative Example 6 | 7.0 | 7.0 | 4/8 | 129 | 5.6 |
| Comparative Example 7 | 8.0 | 8.0 | 3/6 | 133 | 5.3 |
| Comparative Example 8 | 7.0 | 7.0 | 4/8 | 129 | 5.4 |
| Comparative Example 9 | 7.0 | 7.0 | 3/6 | 130 | 5.9 |
| Comparative Example 10 | 7.0 | 7.0 | 3/6 | 127 | 6.2 |
| Comparative Example 11 | 8.0 | 8.0 | 4/8 | 127 | 4.6 |
| Comparative Example 12 | 8.0 | 8.0 | 3/6 | 127 | 4.5 |
| Comparative Example 13 | 8.0 | 8.0 | 4/8 | 127 | 4.3 |
| Comparative Example 14 | - | - | - | - | - |

<Experimental Example 1> Analysis of characteristics of microporous membrane

The microporous membranes manufactured according to the examples and the comparative examples were used to analyze their characteristics according to the test methods and the results are summarized in the following Table 5.

[Table 5]

| | Puncture strength (N/μm) | Gas permeability (×10$^5$ Darcy) | Porosity (%) | Average pore size (nm) | Surface roughness (μm) | Shut-down temperature (°C) | Melt-down temperature (°C) |
|---|---|---|---|---|---|---|---|
| Example 1 | 0.42 | 1.7 | 35.9 | 35.8 | 1.6 | 135.6 | >170 |
| Example 2 | 0.40 | 1.9 | 36.8 | 37.1 | 1.8 | 135.2 | >170 |
| Example 3 | 0.36 | 1.6 | 34.5 | 36.1 | 1.7 | 135.0 | >170 |
| Example 4 | 0.35 | 1.6 | 34.8 | 35.5 | 1.6 | 135.7 | >170 |
| Example 5 | 0.32 | 1.5 | 33.8 | 33.8 | 1.5 | 135.6 | >170 |
| Example 6 | 0.33 | 1.4 | 33.3 | 32.4 | 1.5 | 135.8 | >170 |
| Comparative Example 1 | 0.35 | 1.3 | 32.2 | 37.4 | 1.8 | 138.8 | >170 |
| Comparative Example 2 | 0.40 | 1.5 | 33.8 | 32.9 | 1.7 | 135.9 | >143.6 |
| Comparative Example 3 | 0.45 | 0.4 | 21.3 | 24.7 | 1.3 | 135.2 | >170 |
| Comparative Example 4 | 0.43 | 1.9 | 36.9 | 37.5 | 2.0 | 143.5 | >170 |
| Comparative Example 5 | 0.48 | 0.1 | 10.8 | - | 1.2 | 129.2 | >170 |
| Comparative Example 6 | 0.28 | 1.1 | 29.2 | 32.1 | 1.5 | 134.1 | >170 |
| Comparative Example 7 | 0.34 | 2.1 | 37.4 | 37.5 | 1.9 | 142.4 | >170 |
| Comparative Example 8 | 0.32 | 0.7 | 25.7 | 28.8 | 1.4 | 133.5 | >170 |
| Comparative Example 9 | 0.38 | 1.4 | 33.7 | 36.2 | 1.6 | 140.1 | >170 |
| Comparative Example 10 | 0.36 | 1.5 | 34.0 | 35.8 | 1.7 | 135.5 | >150.5 |
| Comparative Example 11 | 0.41 | 1.1 | 28.6 | 31.3 | 2.2 | 136.0 | >170 |
| Comparative Example 12 | 0.42 | 1.0 | 27.3 | 30.7 | 2.6 | 135.9 | >170 |
| Comparative Example 13 | 0.44 | 0.6 | 24.1 | 26.9 | 1.3 | 130.5 | >170 |
| Comparative Example 14 | - | - | - | - | - | - | - |

(In Tables 4 and 5, "-" means immeasurable.)

As confirmed from Table 5, when microporous membranes were manufactured by combining the molecular weight and the melting temperature of the first polyethylene, the second polyethylene, and the polypropylene so that they were Mw of $30\times10^4$ g/mol to $100\times10^4$ g/mol and Tm of 133°C or higher, Mw of less than $30\times10^4$ g/mol and Tm of 126°C or lower, Mv of $100\times10^4$ g/mol to $300\times10^4$ g/mol and Tm 160°C or higher, in which the weight ratio between the first polyethylene and the second polyethylene was 60:40 to 85:15 and the weight ratio between the polyethylene mixture and the polypropylene was 85:15 to 95:5, the physical and chemical properties of the microporous membrane shown in Table 5 were all simultaneously achieved.

Specifically, when the viscosity average molecular weight of the polypropylene was lower than $100\times10^4$ g/mol, the polypropylene was pushed to the surface of the membrane during the manufacturing process of the microporous membrane, resulting in defects such as surface unevenness. In addition, in this case, the surface roughness of the membrane was increased, and when the surface roughness was higher than 2.1 $\mu$m, battery pressure resistance was deteriorated in the case of using the microporous membrane as the separator of a battery, or battery stability was deteriorated due to dendrite formation. However, when the viscosity average molecular weight of the polypropylene was higher than $300\times10^4$ g/mol, kneading with polyethylene was difficult, and thus, it was impossible to mold the microporous membrane.

In addition, when the weight average molecular weight or the melting temperature of the polyethylene did not satisfy the specified range, the shrinkage rates in the machine direction (MD) and the transverse direction (TD) were not set at 5% or less and 10% or less, respectively, during drying after extracting the diluent, or the heat fixation temperature was set at a temperature higher than the melting temperature of the second polyethylene by more than 5°C, inferiority was shown in any one or more physical properties of the puncture strength, the gas permeability, the porosity, the shut-down temperature, and the melt-down temperature of the microporous membrane.

### <Experimental Example 2> Analysis of battery characteristics

The microporous membranes manufactured according to the examples and the comparative examples were used to analyze the characteristics of the batteries including the microporous membranes as separators according to the test methods 11 to 13, and the results are summarized in the following Table 6.

[Table 6]

| | Hot-box evaluation | Life evaluation (capacity retention rate, %) | Initial electrical resistance evaluation (mΩ) |
|---|---|---|---|
| Example 1 | Pass | 97 | 65 |
| Example 2 | Pass | 98 | 65 |
| Example 3 | Pass | 97 | 67 |
| Example 4 | Pass | 97 | 69 |
| Example 5 | Pass | 97 | 72 |
| Example 6 | Pass | 96 | 73 |
| Comparative Example 1 | Fail | 94 | 77 |
| Comparative Example 2 | Fail | 95 | 73 |
| Comparative Example 3 | Pass | 84 | 96 |
| Comparative Example 4 | Fail | 97 | 66 |
| Comparative Example 5 | Pass | - | 133 |
| Comparative Example 6 | Pass | 90 | 83 |
| Comparative Example 7 | Fail | 99 | 61 |
| Comparative Example 8 | Pass | 88 | 91 |
| Comparative Example 9 | Fail | 94 | 74 |
| Comparative Example 10 | Fail | 95 | 73 |
| Comparative Example 11 | Fail | 90 | 83 |
| Comparative Example 12 | Pass | 89 | 81 |
| Comparative Example 13 | Pass | 86 | 92 |
| Comparative Example 14 | | | |

(In Table 6, "-" means immeasurable.)

As confirmed from Table 6, as a result of manufacturing microporous membranes having the physical properties of Table 5 by combining the molecular weight and the melting temperature of the first polyethylene, the second polyethylene, and the polypropylene so that they were Mw of $30\times10^4$ g/mol to $100\times10^4$ g/mol and Tm of 133°C or higher, Mw of less than $30{\times}10^4$ g/mol and Tm of 126°C or lower, Mv of $100{\times}10^4$ g/mol to $300{\times}10^4$ g/mol and Tm 160°C or higher, in which the weight ratio between the first polyethylene and the second polyethylene was 60:40 to 85:15 and the weight ratio between the polyethylene mixture and the polypropylene was 85:15 to 95:5, assembling 2 Ah batteries, and performing evaluation, the secondary battery characteristics shown in Table 6 could all be implemented simultaneously.

Meanwhile, when the weight average molecular weight or the melting temperature of the polyethylene did not satisfy the specified range, the shrinkage in the machine direction (MD) or the transverse direction (TD) during drying after extracting the diluent was not set at 5% or less and 10% or less, respectively, or the heat fixation temperature was set to a temperature higher than the melting temperature of the second polyethylene by 5°C, inferiority was shown in any one or more of the hot-box evaluation, life evaluation, and initial electrical resistance evaluation, and in Comparative Example 5, the capacity after 100 cycles was not measurable, so that it was difficult to compare it with the initial capacity.

The polyolefin-based microporous membrane according to an exemplary embodiment satisfies all of a puncture strength of 0.3 N/$\mu$m or more, a gas permeability of $0.8{\times}10^{-5}$ Darcy or more, a porosity of 30.0% or more, and a surface roughness of 2.1 $\mu$m or less, thereby improving the physical properties such as strength or permeability of the membrane simultaneously and implementing improved surface uniformity of the membrane. Therefore, when the polyolefin-based microporous membrane according to the exemplary embodiment is used as a separator for a secondary battery, battery safety may be improved.

The above description is only an example to which the principle of the present disclosure is applied, and other constitutions may be further included without departing from the scope of the present disclosure. Hereinabove, though an example embodiment has been described in detail by the examples and the experimental examples, the scope of an example embodiment is not limited to specific examples and should be construed by the appended claims.

### Claims

1. A polyolefin-based microporous membrane which has a puncture strength of 0.3 N/$\mu$m or more; a gas permeability of $0.8{\times}10^{-5}$ Darcy or more (approx. $0.8{\times}10^{-5}$ $\mu$m$^2$ or more); a porosity of 30.0% or more; and a surface roughness of 2.1 $\mu$m or less, the surface roughness being a value obtained by selecting at least 5 random points on a front surface and at least 5 random points on a back surface of the polyolefin-based microporous membrane, each having an area of 284 $\mu$m (width) $\times$ 220 $\mu$m (length), measuring a maximum height difference ($\mu$m, R$_{max}$), which is a difference between the highest surface height and the lowest surface height in the area of each point, and adding an average value of values measured in each of the 5 points on the front surface and an average value of values measured in each of the 5 points on the back surface.

2. The polyolefin-based microporous membrane of claim 1, wherein the polyolefin-based microporous membrane includes a polyethylene mixture including a first polyethylene having a weight average molecular weight of $30{\times}10^4$ g/mol to $100{\times}10^4$ g/mol and a melting temperature of 133°C or higher; and a second polyethylene having a weight average molecular weight of less than $30{\times}10^4$ g/mol and a melting temperature of 126°C or lower.

3. The polyolefin-based microporous membrane of claim 2, wherein the polyolefin-based microporous membrane further includes a polypropylene having a viscosity average molecular weight of $100{\times}10^4$ g/mol to $300{\times}10^4$ g/mol and a melting temperature of 160°C or higher.

4. The polyolefin-based microporous membrane of claim 2, wherein a weight ratio between the first polyethylene and the second polyethylene is 60:40 to 85:15.

5. The polyolefin-based microporous membrane of claim 3, wherein a weight ratio between the polyethylene mixture and the polypropylene is 85:15 to 95:5.

6. The polyolefin-based microporous membrane of any one of claims 1 to 5, wherein the polyolefin-based microporous membrane has an average pore size of 20 nm to 50 nm, as measured by using a half dry method in accordance with ASTM F316-03.

7. The polyolefin-based microporous membrane of any one of claims 1 to 6, wherein the polyolefin-based microporous membrane has a thickness of 3 $\mu$m to 20 $\mu$m.

8. A separator for a secondary battery which has a puncture strength of 0.3 N/$\mu$m or more, a gas permeability of $0.8{\times}10^{-5}$ Darcy (approx. $0.8{\times}10^{-5}$ $\mu$m$^2$ or more) or more, a porosity of 30.0% or more, and a surface roughness of 2.1 $\mu$m or less, the surface roughness being a value obtained by selecting 5 random points on a front surface and 5 random points on a back surface of the separator for a secondary battery, each having an area of 284 $\mu$m (width) $\times$ 220 $\mu$m (length), measuring a maximum height difference ($\mu$m, $R_{max}$) which is a difference between the highest surface height and the lowest surface height in the area of each point, and adding an average value of values measured in each of the 5 points on the front surface and an average value of values measured in each of the 5 points on the back surface.

9. The separator for a secondary battery of claim 8, wherein the separator for a secondary battery has a shut-down temperature of 137°C or lower, and/or wherein the separator has a melt-down temperature of 155°C or higher.

10. The separator for a secondary battery of claim 8, wherein the separator for a secondary battery includes a polyethylene mixture including a first polyethylene having a weight average molecular weight of $30\times10^4$ g/mol to $100\times10^4$ g/mol and a melting temperature of 133°C or higher; and a second polyethylene having a weight average molecular weight of less than $30\times10^4$ g/mol and a melting temperature of 126°C or lower; optionally, wherein the separator further includes a polypropylene having a viscosity average molecular weight of $100\times10^4$ g/mol to $300\times10^4$ g/mol and a melting temperature of 160°C or higher.

11. The separator for a secondary battery of claim 10, wherein a weight ratio between the first polyethylene and the second polyethylene is 60:40 to 85:15, and/or wherein the weight ratio between the polyethylene mixture and the polypropylene is 85:15 to 95:5.

12. A method for manufacturing a polyolefin-based microporous membrane, the method comprising:

    kneading a polyolefin-based resin and a diluent to prepare a molten material;
    molding the molten material into a sheet form; and
    stretching the molded sheet and then extracting the diluent,
    wherein the polyolefin-based microporous membrane has a puncture strength of 0.3 N/$\mu$m or more, a gas permeability of $0.8\times10^{-5}$ Darcy or more (approx. $0.8\times10^{-5}$ $\mu$m$^2$ or more), a porosity of 30.0% or more, and a surface roughness of 2.1 $\mu$m or less, the surface roughness being a value obtained by selecting 5 random points on a front surface and 5 random points on a back surface of the polyolefin-based microporous membrane, each having an area of 284 $\mu$m (width) $\times$ 220 $\mu$m (length), measuring a maximum height difference ($\mu$m, $R_{max}$) which is a difference between the highest surface height and the lowest surface height in the area of each point, and adding an average value of values measured in each of the 5 points on the front surface and an average value of values measured in each of the 5 points on the back surface.

13. The method for manufacturing a polyolefin-based microporous membrane of claim 12, further comprising: after extracting the diluent, drying the sheet to a shrinkage in a machine direction (MD) of 5% or less and a shrinkage in a transverse direction (TD) of 10% or less.

14. The method for manufacturing a polyolefin-based microporous membrane of claim 12, wherein the manufactured polyolefin-based microporous membrane is a separator for a secondary battery.

15. A secondary battery comprising the polyolefin-based microporous membrane of any one of claims 1 to 7 or the separator for a secondary battery of any one of claims 8 to 11.

FIG. 1

FIG. 2

**EUROPEAN SEARCH REPORT**

Application Number

EP 25 18 0496

Europäisches
Patentamt
European
Patent Office
Office européen
des brevets

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | CN 111 138 741 A (CHONGQING YUNTIANHUA NIUMI TECH CO LTD) 12 May 2020 (2020-05-12) * example 5 * * table 2 * ----- | 1-15 | INV. H01M50/489 H01M50/417 H01M10/052 C08J5/18 H01M50/403 H01M50/491 C08L23/04 |
| T | Anonymous: "ASTM D6474-19 Standard Test Method for Determining Molecular Weight Distribution and Molecular Weight Averages of Polyolefins by High Temperature Gel Permeation Chromatography", ASTM D6474-19, 1 November 2019 (2019-11-01), XP055850198, DOI: 10.1520/D6474-19 Retrieved from the Internet: URL:https://www.astm.org/d6474-19.html [retrieved on 2021-10-12] * the whole document * ----- | | ADD. B29C55/00 B01D71/26 |
| T | HERMAN L. WAGNER: "The Mark-Houwink-Sakurada Equation for the Viscosity of Linear Polyethylene", JOURNAL OF PHYSICAL AND CHEMICAL REFERENCE DATA, vol. 14, no. 2, 1 April 1985 (1985-04-01), pages 611-617, XP093165641, US ISSN: 0047-2689, DOI: 10.1063/1.555751 * the whole document * ----- | | |

TECHNICAL FIELDS SEARCHED (IPC)

H01M
C08J

The present search report has been drawn up for all claims

| Place of search | Date of completion of the search | Examiner |
|---|---|---|
| The Hague | 5 November 2025 | Järvi, Tommi |

EPO FORM 1503 03.82 (P04C01)

## ANNEX TO THE EUROPEAN SEARCH REPORT
## ON EUROPEAN PATENT APPLICATION NO.

EP 25 18 0496

This annex lists the patent family members relating to the patent documents cited in the above-mentioned European search report.
The members are as contained in the European Patent Office EDP file on
The European Patent Office is in no way liable for these particulars which are merely given for the purpose of information.

05-11-2025

| Patent document cited in search report | Publication date | Patent family member(s) | Publication date |
|---|---|---|---|
| CN 111138741 A | 12-05-2020 | NONE | |

For more details about this annex : see Official Journal of the European Patent Office, No. 12/82

EPO FORM P0459